# EUROPEAN PATENT SPECIFICATION

(11) **EP 0 780 420 B1**
(45) Date of publication and mention of the grant of the patent: **02.05.2003**
(21) Application number: 96309162.4
(22) Date of filing: 16.12.1996
(51) Int. Cl.: C08G 77/388

(54) **Method of controlling the emission of volatile oxime by products from silicone compositions curable in presence of moisture**
Verfahren zur Emissions-Regelung von flüchtigen Oximnebenprodukten feuchtigkeitshärtender Siliconzusammensetzungen
Méthode pour controler l'emission de sous-produit d'oxime des compositions silicones réticulables par humidité

(30) Priority: 23.12.1995 DE 19548592
(43) Date of publication of application: 25.06.1997
(73) Proprietor: Dow Corning GmbH, 65201 Wiesbaden (DE)
(72) Inventor: Koerner, Dieter, 72644 Oberboihingen (DE); Mueller, Dieter, 72638 Neuffen (DE)
(74) Representative: Bullows, Michael

(56) References cited:
- EP-A- 0 131 446
- US-A- 4 495 331
- DATABASE WPI Derwent Publications Ltd., London, GB; AN 96-205727 XP002065261 & JP 08 073 745 A (TOKYO 3 BOND) , 19 March 1996

## Description

This invention is concerned with a method for controlling the emission of oxime by-product from silicone compositions curable in the presence of moisture and also relates to the use of an organic isocyanate to control the emission of volatile oxime by-products.

Typically, such compositions are curable by crosslinking at room temperature in presence of moisture and contain a crosslinking agent which forms a condensation by-product during crosslinking. Crosslinking systems of single-component or multi-component silicone compositions of this type are frequently used as sealing materials or as binders.

The method of the present invention is particularly concerned with silicone compositions obtained by mixing a polymeric material having reactive terminal groups, generally silanol groups, with a crosslinking agent for the polymeric material which is a silane having at least two oximo groups per molecule. During the preparation of the composition by compounding its ingredients, silanol and moisture contained in the formulation raw materials, for example in the polymeric material or in the inorganic filler such as silica or calcium carbonate, or atmospheric moisture, react to generate a condensation by-product, for example methyl ethyl ketoxime. The condensation by-products, provided that they are volatile, are emitted slowly at the surface of the curing or cured silicone composition by diffusion and are volatilised there. The volatilising condensation products may lead to shrinkage of the cured material which may be regarded as aesthetically undesirable and technically undesirable if, for example, it results in a loss of adhesion on a substrate to which it has been applied. Furthermore, escaping materials may cause a nasal nuisance or may even be damaging to health.

EP 0131446 relates to a room temperature curable polyorganosiloxane composition comprising a polyorganosiloxane having at least two silanol groups per molecule, at least one silicon bonded oxyalkylene radical and a curing agent. The curing agent may be a ketoximosilane/tin catalyst combination. US 4495331 relates to a room temperature vulcanisable organopolysiloxane composition comprising a polydiorganosiloxane base a condensation catalyst and an organic isocyanate which is used as a scavenger for hydroxy groups. US 5036125 relates to a single-component storage stable organopolysiloxane composition comprising a diorganopolysiloxane having silanol end groups, a ketiminoxysilane cross-linker, an inorganic filler, a metal catalyst and a stabilizing amount of isocyanurate which is used to remove traces of water and thereby improve storage stability of the composition.

It is one object of the present invention to control emission of volatile oxime compounds from a silicone composition in which the curative employed is an oximo silane as it cures. This control may manifest itself in prevention of such emission or by depression of the rate of emission over a prolonged period.

Surprisingly we have now found that the rate at which condensation by-products are emitted from silicone compositions in which the curative employed is an oximo silane appears to be significantly reduced or even prevented if there is included in the composition a reactive component, for example an organic isocyanate, reactive with the oxime condensation by-product. The present invention provides in one of its aspects a method of controlling the emission of volatile oxime by-product produced by a composition capable of curing at room temperature in presence of atmospheric moisture which has been formed by mixing materials comprising a polymeric material having not less than two groups bonded to silicon which are hydroxyl or hydrolysable groups, a silane cross-linking agent having at least two oximo groups which are reactive with said polymeric material in the presence of moisture to release an oxime condensation by-product, which method comprises the step of including in the composition an organic isocyanate component in an amount effective to control emission of volatile oxime compounds from the composition as it cures.

Without wishing to be bound by any particular theory, the applicant believes that the beneficial results achieved with this invention are brought about by chemical reaction of the oxime condensation by-product or products with the organic isocyanate component effective to control emission, at least substantially as soon as the oxime condensation by-products are produced and so to convert them to products which remain in the silicone composition. In other words the silicone composition contains a component which reacts with the condensation by-product whereby to capture it and reduce the opportunity for it to be released from the composition.

Also included within the scope of this invention is the use of an organic isocyanate component reactable with oxime condensation by-products in a room temperature curable composition, to control emission of volatile oxime compounds from the composition as it cures, said by-products being formed by mixing a polymeric material having not less than two hydroxyl or hydrolysable groups bonded to silicon and a silane cross-linking agent having at least two oximo groups, in presence of moisture, wherein said organic isocyanate component is provided in an amount effective to control emission of volatile oxime compounds from the composition as it cures.

The polymeric material may be according to the general formula X-A-X where A may be any desired organic or siloxane molecular chain for example a polyoxyalkylene chain or more preferably a polydiorgano-siloxane chain and thus preferably includes siloxane units R"ₛSiO_{4-s/2} in which R" represents an alkyl group having from 1 to 6 carbon atoms, for example a methyl group, a vinyl group or a phenyl group, or fluorinated alkyl group and s has a value of 0, 1 or 2. Preferred materials are linear materials i.e. where s = 2 for all units. Preferred materials have polydiorgano-siloxane chains according to the general formula -(R"₂SiO)ₜ- in which each R" represents a methyl group and t has a value from about 200 to about 1500. Suitable materials have viscosities of the order of about 500 mPa.s to about 200,000 mPa.s. The groups X of the polymeric materials are hydroxyl or hydrolysable groups and may be selected, for example, from -R"₂SiOH, -R"Si(OR⁵)₂, -Si(OR⁵)₃, -R"₂SiOR⁵ or -R"₂SiR" 'SiR"ₚ(OR⁵)₃₋ₚ where R" is as aforesaid, and is preferably methyl, R"' is a divalent hydrocarbon group which may be interrupted by one or more siloxane spacers having up to six silicon atoms, R⁵ represents in alkyl or oxyalkyl group in which the alkyl groups have up to 6 carbon atoms and p has the value 0, 1 or 2.

Preferred polymeric materials are thus polydiorganosiloxanes having terminal, silicon-bound hydroxyl groups or terminal, silicon-bound organic radicals which can be hydrolysed using moisture, wherein these polydiorganosiloxanes preferably have a viscosity of 0.1 to 300 Pa.s at 25°C. The polydiorganosiloxanes may be homopolymers or copolymers. Mixtures of different polydiorganosiloxanes having terminal condensable groups are also suitable.

The said condensable polydiorganosiloxanes preferably have an average viscosity of 10 to 100 Pa.s at 25°C. The organic radical is advantageously a hydrocarbon radical or halogenated hydrocarbon radical having 1 to 10 carbon atoms. Examples of radicals of this type are methyl, ethyl, propyl, butyl, phenyl, vinyl, alkyl, cyclohexyl, tolyl and isopropyl. Examples of halogenated hydrocarbon radicals are chloropropyl, 3,3,3-trifluoropropyl, chlorophenyl, beta-(perfluorobutyl)ethyl and chlorocyclohexyl. The organic radicals are preferably the methyl radical.

The silane curative may be a silane having two or more and preferably three oximo groups, any remaining groups being for example methyl, ethyl or vinyl. Examples of operative oximo silanes are methyl tri ethyl ketoximo silane, vinyl tri methyl ethyl ketoxime silane, tetra methyl ethyl ketoximo silane.

The component effective to control emission of volatile compounds (an oxime capturing substance) is an organic isocyanate. In principle, aromatic isocyanates, such as diphenylmethane diisocyanate (MDI) are suitable. However, aliphatic isocyanates have the advantage compared to aromatic isocyanates that they are more resistant to light, so that a yellow coloration, which is undesirable in many cases, is avoided. The polyisocyanates, particularly diisocyanates are preferred because they react somewhat slower compared to monoisocyanates, as is required in the present case in accordance with the slowly advancing crosslinking process. The isocyanates may also be present in the form of polyurethane prepolymers.

Surprisingly, it has been shown that the isocyanates in the silicone compositions do not impair the stability of the compositions as long as air and moisture are excluded from them. However, when the oxime condensation by-products are released during crosslinking, reactions known in polyurethane chemistry take place because of the relative reactivity of the isocyanates with the oxime condensation by-products.

In principle, the quantity of isocyanate, can be freely selected. Of course it must be enough to capture the oxime condensation by-product to an adequate extent, preferably to bring the concentration in the crosslinked product below a certain limiting value which is acceptable from a regulation or toxicological point of view. The isocyanate is present in the composition in the preferred embodiments essentially in a stoichiometric ratio with the quantity of crosslinker or condensation by-product to be bound or in a proportion which decreases the amount of releasable free oxime below the limiting value. If present in adequate quantity the isocyanate reacts with the oxime condensation by-product being released, during preparation of the silicone composition and subsequent storage with exclusion of moisture, and furthermore reacts with the oxime condensation by-product released by crosslinking.

The isocyanate is usually present in the composition in a quantity of 0.05 to 10 wt.%, preferably a quantity of 2 to 7 wt.%, in particular about 5 wt.%, based on the total weight of the composition. The percentage portion is thus dependent not only on the quantity of the crosslinker or condensation by-product, but also on the content of fillers in the composition and on the molecular weight of the isocyanate. Hence it is understandable that lower quantities by weight are adequate for smaller isocyanates than for isocyanate prepolymers which have a relatively low proportion of isocyanate groups. Examples of suitable aliphatic diisocyanates which can be used, particularly for those compositions in which methyl-ethylketoxime (MEKO) is produced as oxime condensation by-product, are hexamethylene diisocyanate (HDI), isophorone diisocyanate (IPDI), trimethylene diisocyanate (TMDI) and tetramethylxylene diisocyanate (TMXDI). Both primary and secondary isocyanates are suitable.

As already mentioned above, the storage stability of the systems is not disadvantageously impaired by the inclusion of isocyanates. Interestingly, the viscosity is somewhat increased by the addition of isocyanate. This has the advantage that the proportion of pyrogenic silicic acid may be reduced. Silicone compositions according to the invention may be prepared in a manner known per se, but it is important that the isocyanate is mixed in after the other components have already been mixed with one another. Thus, a process for preparing compositions used in the method according to the invention comprises mixing under at least substantially anhydrous conditions the polymeric material having not less than two groups bonded to silicon which are hydroxyl or hydrolysable groups, the silane crosslinking agent having at least two oximo groups which are reactive with said polymeric material in the presence of moisture to release an oxime condensation by-product and finely divided filler and thereafter adding, to the mixture so formed, the organic isocyanate effective to control emission of volatile oxime compounds from the composition as it cures. After mixing, the compositions should be stored under substantially anhydrous conditions, for example in sealed containers, until required for use.

The oxime condensation by-products, which are usually volatile, are chemically captured due to the addition of isocyanate, and bound in the system. Oximes, such as methyl-ethylketoxime (MEKO) are regarded as damaging to health and a nasal nuisance. Since the condensation by-products remain in the cured compositions according to the present invention, emission of oximes and volume reductions are reduced or avoided. In addition, it has been noted, that isocyanates when present also favourably influence mechanical properties of the crosslinked compositions. Hence the elongation at break increases with increasing isocyanate content.

The addition according to the invention of a component reacting with the oxime condensation by-product is particularly preferred for RTV systems with crosslinkers based on oximosilanes for the reasons mentioned above. Those oximosilanes which form methyl-ethylketoxime (MEKO) as oxime condensation by-product are mainly used in systems of this type. As a result of suitable selection of the components reacting with the oxime condensation by-products, particularly the isocyanates, they may be substantially adapted as regards the reactivity of the release rate of MEKO. Mixtures of components capturing the oxime condensation by-products may also be provided, particularly mixtures of isocyanates.

Compositions used in the method of this invention may contain a silica such as high surface area fume or precipitated silica and may also contain as optional constituents other ingredients which are conventional to the formulation of silicone rubber sealants and the like. For example, the compositions will normally contain one or more other finely divided, reinforcing or extending fillers such as crushed quartz, diatomaceous earth, calcium carbonate, magnesium carbonate, zinc carbonate, barium sulphate, iron oxide, titanium dioxide and carbon black. The proportion of such fillers employed will depend on the properties desired in the elastomer-forming composition and the cured elastomer. Usually the filler content of the composition will reside within the range from about 5 to about 150 parts by weight per 100 parts by weight of the polymeric material.

Other ingredients which may be included in the compositions used in the method of the present invention are catalysts and co-catalysts for increasing the rate of cure of the composition, pigments, plasticisers, agents (usually organosilicon compounds) for treating fillers, rheological additives for improving toolability of the composition and adhesion improving substances for example γ-aminopropyl triethoxysilane. Suitable catalysts are titanium compounds, for example tetra isopropyl titanate and tetra n-butyl titanate.

Co-catalysts are well known in the art and include the metal salts of carboxylic acids, for example lead octoate and dibutyltin dilaurate, dibutyltin diacetate and stannous octoate. If a more rapid cure is desired, a chelate, for example an acetyl acetonate, may be added to the mixture. Those acetyl acetonate materials conventionally used as accelerators for titanium catalysts may be employed, for example ethyl aceto acetate and methyl aceto acetate. Another conventional ingredient which can be employed as a plasticiser and to reduce the modulus of the cured elastomer is a polydimethylsiloxane having terminal triorganosiloxy groups wherein the organic substituents are e.g. methyl, vinyl or phenyl or combinations of these groups. Such polydimethylsiloxanes normally have a viscosity of from about 100 to about 100,000 mPa.s at 25°C and can be employed in amounts up to about 80 parts per 100 parts by weight of the polymeric material.

Compositions used in the method according to the invention may be formulated as single part formulations which are stable in storage and cure on exposure to atmospheric moisture and may be employed in a variety of applications, for example as coating, caulking and encapsulating materials. They are, however, particularly suitable for sealing joints cavities and other spaces in articles and structures which are subject to relative movement. They are thus particularly suitable as glazing sealants and for sealing building structures. They have desired cure properties to provide cured seals having a modulus sufficiently low for most industry standards and elongation to break which is sufficiently high for most industry standards.

In order that the invention may become more clear there now follows a detailed description of Examples selected for description to illustrate the invention and with reference to the drawings. In the Examples, all parts are by weight and all viscosities are at 25°C unless the context otherwise requires.

In the drawings:-

Figure 1 is a Table showing weight loss with respect to cure time of compositions with and without 2.5 weight % of various isocyanates, and

Figure 2 is a Table showing weight loss with respect to cure time of compositions with and without 5 weight % of various isocyanates.

### Example 1

A basic recipe for a composition used in the method according to this invention was prepared by mixing the following components at room temperature with exclusion of moisture:

| Parts | Component |
|---|---|
| 100 | Commercially available polydimethyl-siloxane with terminal SiOH groups (viscosity 80 Pa.s), |
| 10 | methyltri(methylethyl-ketoximosilane), |
| 50 | trimethylsilyl-end blocked polydimethylsiloxane 0.1 Pa.s (silicone plasticiser) |
| 10 | pyrogenic silicic acid (surface area 150m²/g) |
| 120 | stearate treated calcium carbonate |
| 2 | γ-aminopropyl-triethoxysilane (adhesion promoter) |
| 0.2 | dibutyl tin dilaurate (catalyst) |

2.5 parts or 5 parts (i.e. 2.5 weight % and 5 weight % respectively) of hexamethylene diisocyanate (HDI) prepolymer (Desmodur® N 100 supplied by Bayer) were added to 100g of this basic recipe to prepare two silicone compositions and mixed with exclusion of moisture.

The volatile reaction products present in the resulting formulation were determined by means of collection in a head space device and subsequent analysis by GC/MS (standardised gas chromatography/mass spectroscopy). The volatile reaction products present in silicone composition according to the basic recipe without isocyanate were determined in the same manner as a comparison.

The relative content of oxime measured, in the present case methyl-ethylketoxime (MEKO), is shown as follows:

| | 100 parts basic recipe without HDI prepolymer | 100 parts basic recipe plus 2.5 parts HDI prepolymer | 100 parts basic recipe plus 5 parts HDI prepolymer |
|---|---|---|---|
| MEKO content | 7.6 | 1.9 | 0 |

### Example 2

The three formulations according to Example 1 were analysed once again after allowing the samples to be exposed to moisture and so start the crosslinking process in the presence of moisture. The volatile products, which were formed during a 16-hour crosslinking time, were collected in a small glass bottle and analysed in turn by standardised GC/MS using a head-space device.

The values for the relative content of MEKO are shown as follows:

| | 100 parts basic recipe without HDI prepolymer | 100 parts basic recipe plus 2.5 parts HDI prepolymer | 100 parts basic recipe plus 5 parts HDI prepolymer |
|---|---|---|---|
| MEKO content | 17.5 | 10.8 | 7.0 |

The weight loss of the three formulations during crosslinking was likewise determined. The following table summarises the inclusion of isocyanate addition to reduction in weight loss.

| Cross-linking time (hours) | 100 parts basic recipe without HDI prepolymer | 100 parts basic recipe plus 2.5 parts HDI prepolymer | 100 parts basic recipe plus 5 parts HDI prepolymer |
|---|---|---|---|
| Weight loss (%) | | | |
| 2 | 0.07 | 0.04 | 0.02 |
| 4 | 0.14 | 0.07 | 0.03 |
| 6 | 0.18 | 0.08 | 0.04 |
| 24 | 0.42 | 0.21 | 0.09 |
| 48 | 0.62 | 0.33 | 0.16 |
| 200 | 1.18 | 0.65 | 0.33 |

Crosslinking led to a dry, non-sticky surface for all three formulations and the result was materials having a low modulus of elasticity. No effect of the isocyanate addition on crosslinking or the design of cure was seen.

### Example 3

Different diisocyanates were added to 100 parts of the basic recipe according to Example 1 in quantities of 2.5 parts and 5 parts (2.5 wt.% and 5 wt.% respectively). These diisocyanates were para-tetramethylxylol diisocyanate (TMXDI), isophorone diisocyanate (IPDI) and diphenylmethane diisocyanate (MDI) as aromatic diisocyanate. In addition, tosyl isocyanate (TI) (p-toluene sulphonyl isocyanate) was used as monofunctional isocyanate.

The same tests were carried out on the silicone compositions obtained using the said isocyanates as with the silicone compositions according to Example 2.

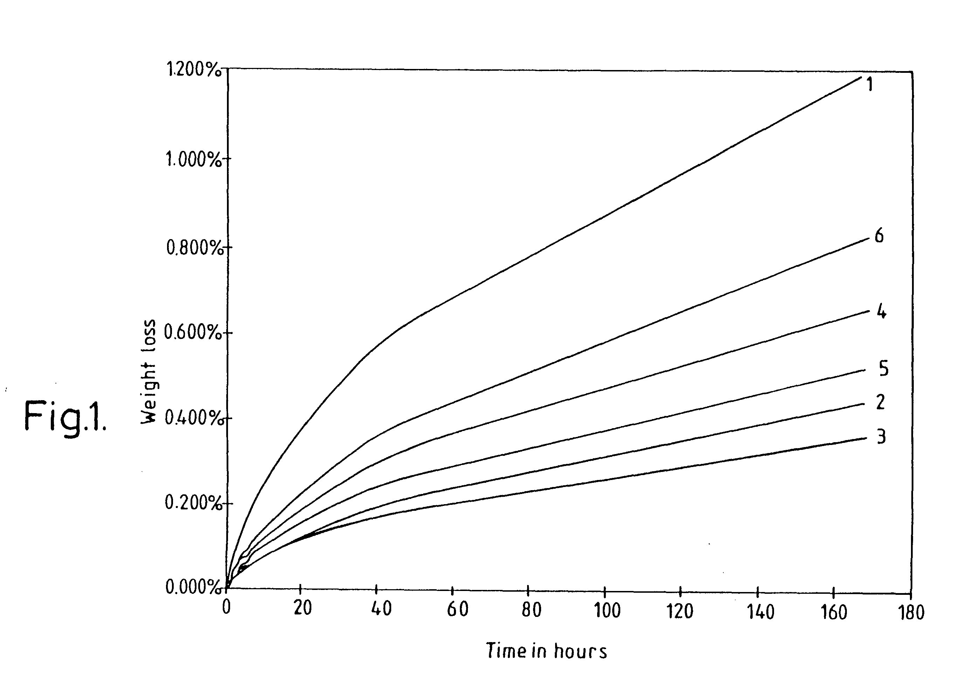

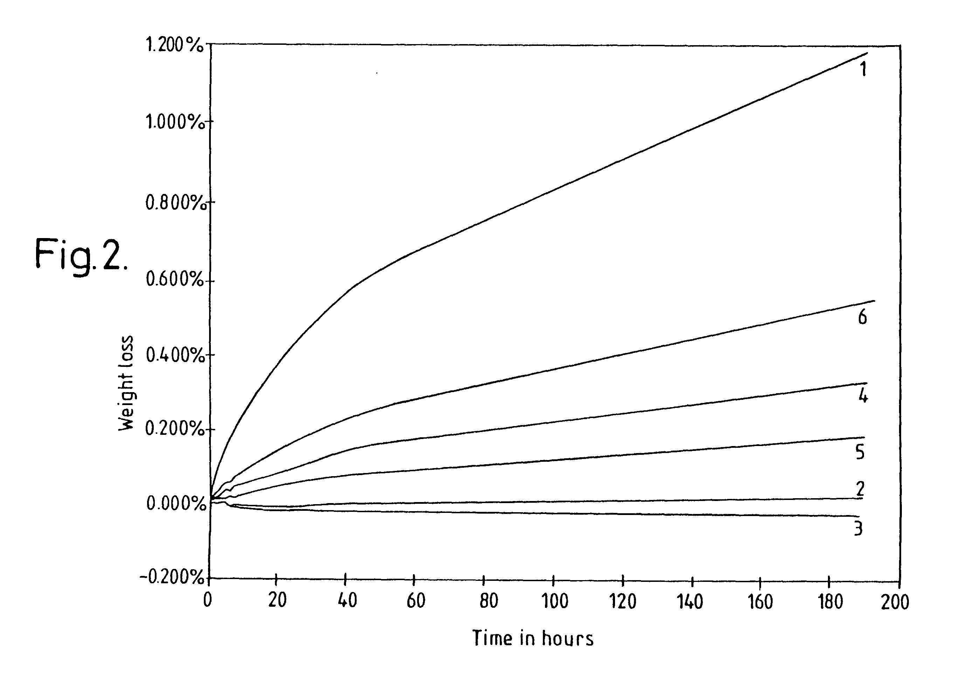

The outcome of the results from Examples 2 and 3 are shown in Figures 1 and 2. The numbers (curves) 1 to 6 there represent the following isocyanates:

| | | |
|---|---|---|
| 1 | 0 (reference) | (Example 2) |
| 2 | TMXDI | (Example 3) |
| 3 | IPDI | (Example 3) |
| 4 | HDI | (Example 2) |
| 5 | MDI | (Example 3) |
| 6 | TI | (Example 3) |

These diagrams clearly show that there is a significant reduction in weight loss in the case of addition of isocyanates. The results also show that the aliphatic diisocyanates have a more pronounced effect in the selected example than the aromatic diisocyanates used.

## Claims

1. A method of controlling the emission of volatile oxime by-product produced by a composition capable of curing at room temperature in presence of atmospheric moisture which has been formed by mixing materials comprising a polymeric material having not less than two groups bonded to silicon which are hydroxyl or hydrolysable groups, a silane cross-linking agent having at least two oximo groups which are reactive with said polymeric material in presence of moisture to release an oxime condensation by-product, which method comprises the step of including in the composition an organic isocyanate component in an amount effective to control emission of volatile oxime compounds from the composition as it cures.

2. A method in accordance with claim 1 wherein the organic isocyanate component is selected from the group consisting of aliphatic di-isocyanates and diphenylmethane di-isocyanate.

3. A method according to Claim 1 or 2 wherein the polymeric material is in accordance with the general formula X-A-X where A represents a polyoxyalkylene chain or a polydiorgano-siloxane chain and X represents a hydroxyl or hydrolysable group selected from -R"₂SiOH, -R"Si(OR⁵)₂, -Si(OR⁵)₃, -R"₂SiOR⁵ or -R"₂SiR"'SiR"_{*p*}(OR⁵)₃₋_{*p*} where R" represents an alkyl or fluoroalkyl group, R"' is a divalent hydrocarbon group which may be interrupted by one or more siloxane spacers having up to six silicon atoms, R⁵ represents an alkyl or oxyalkyl group in which the alkyl groups have up to 6 carbon atoms and *p* has the value 0, 1 or 2.

4. A method according to Claim 3 further **characterised in that** A represents -(R"₂SiO)_{*t*}- in which each R" represents a methyl group and *t* has a value from about 200 to about 1500.

5. Use of an organic isocyanate component reactable with oxime condensation by-products in a room temperature curable composition, to control emission of volatile oxime compounds from the composition as it cures, said by-products being formed by mixing a polymeric material having not less than two hydroxyl or hydrolysable groups bonded to silicon and a silane cross-linking agent having at least two oximo groups, in presence of moisture, wherein said organic isocyanate component is provided in an amount effective to control emission of volatile oxime compounds from the composition as it cures.

6. Use according to Claim 5 **characterised in that** the organic isocyanate component has at least one isocyanate group.

7. Use according to Claim 5 or 6 further **characterised in that** the organic isocyanate is selected from the group of an aliphatic di-isocyanate and diphenylmethane di-isocyanate.

8. Use according to any one of claims 5 to 7 wherein the polymeric material is in accordance with the general formula X-A-X where A represents a polyoxyalkylene chain or a polydiorgano-siloxane chain and X represents a hydroxyl or hydrolysable group selected from -R"₂SiOH, -R"Si(OR⁵)₂, -Si(OR⁵)₃, -R"₂SiOR⁵ or -R"₂SiR"'SiR"_{*p*}(OR⁵)₃₋_{*p*} where R" represents an alkyl or fluoroalkyl group, R"' is a divalent hydrocarbon group which may be interrupted by one or more siloxane spacers having up to six silicon atoms, R⁵ represents an alkyl or oxyalkyl group in which the alkyl groups have up to 6 carbon atoms and *p* has the value 0, 1 or 2.

9. Use in accordance with claim 8 further **characterised in that** A represents -(R"₂SiO)_{*t*}- in which each R" represents a methyl group and *t* has a value from about 200 to about 1500.

## Patentansprüche

1. Verfahren zum Regeln der Emission von flüchtigem Oximnebenprodukt, das durch eine Zusammensetzung erzeugt wird, die fähig ist, bei Raumtemperatur in Gegenwart von atmosphärischer Feuchtigkeit zu härten und die durch Mischen von Stoffen gebildet wurde, die einen polymeren Stoff mit nicht weniger als zwei an Silicium gebundenen Gruppen, die Hydroxyl- oder hydrolysierbare Gruppen sind, ein Silanvernetzungsmittel mit mindestens zwei Oximgruppen, die mit diesem polymeren Stoff in Gegenwart von Feuchtigkeit reaktiv sind, um ein Oximkondensationsnebenprodukt freizusetzen, umfassen, wobei das Verfahren den Schritt des Einschließens einer organischen Isocyanatkomponente in die Zusammensetzung in einer Menge, die wirksam ist, um die Emission von flüchtigen Oximbestandteilen aus der Zusammensetzung, wenn sie härtet, zu regeln.

2. Verfahren nach Anspruch 1, worin die organische Isocyanatkomponente ausgewählt ist aus der Gruppe bestehend aus aliphatischen Diisocyanaten und Diphenylmethandiisocyanat.

3. Verfahren nach Anspruch 1 oder 2, worin der polymere Stoff mit der allgemeinen Formel X-A-X übereinstimmt, worin A eine Polyoxyalkylenkette oder eine Polydiorganosiloxankette darstellt und X eine Hydroxyl- oder hydrolysierbare Gruppe darstellt, ausgewählt aus -R"₂SiOH, -R"₂Si(OR⁵)₂, -Si(OR⁵)₃, -R"₂SiOR⁵ oder -R"₂SiR"'SiR"ₚ(OR⁵)₃₋ₚ, worin R" eine Alkyl- oder Fluoralkylgruppe darstellt, R"' eine divalente Kohlenwasserstoffgruppe darstellt, die mit einem oder mehreren Siloxanabstandshaltern mit bis zu sechs Siliciumatomen unterbrochen sein kann, R⁵ eine Alkyl- oder Oxyalkylgruppe darstellt, in welcher die Alkylgruppen bis zu 6 Kohlenstoffatome aufweisen, und p den Wert 0, 1 oder 2 hat.

4. Verfahren nach Anspruch 3, weiterhin **dadurch gekennzeichnet, dass** A -(R"₂SiO)ₜ- darstellt, worin jedes R" eine Methylgruppe darstellt und t einen Wert von etwa 200 bis etwa 1500 aufweist.

5. Verwendung einer organischen Isocyanatkomponente, die mit Oximkondensationsnebenprodukten in einer bei Raumtemperatur härtbaren Zusammensetzung reaktionsfähig ist, um die Emission von flüchtigen Oximverbindungen aus der Zusammensetzung, wenn sie härtet, zu regeln, wobei diese Nebenprodukte durch Mischen eines polymeren Stoffes mit nicht weniger als zwei Hydroxyl- oder hydrolysierbaren Gruppen, die an Silicium gebunden sind, und einem Silanvernetzungsmittel mit mindestens zwei Oximgruppen in Gegenwart von Feuchtigkeit gebildet werden, wobei diese organische Isocyanatkomponente in einer Menge bereitgestellt wird, die wirksam ist, um die Emission von flüchtigen Oximverbindungen aus der Zusammensetzung, wenn sie härtet, zu regeln.

6. Verwendung nach Anspruch 5, **dadurch gekennzeichnet, dass** die organische Isocyanatkomponente mindestens eine Isocyanatgruppe aufweist.

7. Verwendung nach Anspruch 5 oder 6, weiterhin **dadurch gekennzeichnet, dass** das organische Isocyanat ausgewählt ist aus der Gruppe eines aliphatischen Diisocyanats und Diphenylmethandiisocyanat.

8. Verwendung nach einem der Ansprüche 5 bis 7, wobei der polymere Stoff mit der allgemeinen Formel X'-A-X übereinstimmt, worin A eine Polyoxyalkylenkette oder eine Polydiorganosiloxankette darstellt und X eine. Hydroxyl- oder hydrolysierbare Gruppe darstellt, ausgewählt aus -R"₂SiOH, -R"₂Si(OR⁵)₂, -Si(OR⁵)₃, -R"₂SiOR⁵ oder -R"₂SiR"'SiR"ₚ(OR⁵)₃₋ₚ, worin R" eine Alkyl- oder Fluoralkylgruppe darstellt, R"' eine divalente Kohlenwasserstoffgruppe darstellt, die mit einem oder mehreren Siloxanabstandshaltern mit bis zu sechs Siliciumatomen unterbrochen sein kann, R⁵ eine Alkyl- oder Oxyalkylgruppe darstellt, in welcher die Alkylgruppen bis zu 6 Kohlenstoffatome aufweisen, und p den Wert 0, 1 oder 2 hat.

9. Verwendung nach Anspruch 8, weiterhin **dadurch gekennzeichnet, dass** A -(R"₂SiO)ₜ- darstellt, worin jedes R" eine Methylgruppe darstellt und t einen Wert von etwa 200 bis etwa 1500 aufweist.

## Revendications

1. Procédé pour réguler l'émission d'un sous-produit oxime volatil produit par une composition capable de durcir à la température ambiante en présence d'humidité atmosphérique qui a été formé par mélange de produits comprenant un produit polymère ayant au moins deux groupes liés au silicium qui sont des groupes hydroxyle ou des groupes hydrolysables, un agent de réticulation silane ayant au moins deux groupes oximo qui sont réactifs avec ledit produit polymère en présence d'humidité pour libérer un sous-produit de condensation oxime, lequel procédé comprend l'étape d'inclusion dans la composition d'un composant isocyanate organique en une quantité efficace pour réguler l'émission de composés oximes volatils par la composition quand elle durcit.

2. Procédé selon la revendication 1 où le composant isocyanate organique est choisi dans le groupe consistant en les diisocyanates aliphatiques et le diisocyanate de diphénylméthane.

3. Procédé selon la revendications 1 ou 2, où le produit polymère est conforme à la formule générale X-A-X où A représente une chaîne polyoxyalkylène ou une chaîne polydiorganosiloxane et X représente un groupe hydroxyle ou un groupe hydrolysable choisi parmi -R"₂SiOH, -R"Si(OR⁵)₂, -Si(OR⁵)₃, -R"₂SiOR⁵ et -R"₂SiR"' SiR"_{*p*}(OR⁵)₃₋_{*p*} où R" représente un groupe alkyle ou fluoroalkyle, R"' est un groupe hydrocarboné divalent qui peut être interrompu par un ou plusieurs espaceurs siloxanes ayant jusqu'à 6 atomes de silicium, R⁵ représente un groupe alkyle ou oxyalkyle où les groupes alkyle ont jusqu'à 6 atomes de carbone et *p* a la valeur 0, 1 ou 2.

4. Procédé selon la revendication 3, **caractérisé en outre en ce que** A représente -(R"₂SiO)_{*t*}- où chaque R" représente un groupe méthyle et *t* a une valeur d'environ 200 à environ 1500.

5. Utilisation d'un composant isocyanate organique pouvant réagir avec des sous-produits de condensation oximes dans une composition durcissable à la température ambiante, pour réguler l'émission de composés oximes volatils par la composition quand elle durcit, lesdits sous-produits étant formés par mélange d'un produit polymère ayant au moins deux groupes hydroxyle ou hydrolysables liés au silicium et d'un agent de réticulation silane ayant au moins deux groupes oximo, en présence d'humidité, où ledit composant isocyanate organique est fourni en une quantité efficace pour réguler l'émission de composés oximes volatils par la composition quand elle durcit.

6. Utilisation selon la revendication 5, **caractérisée en ce que** le composant isocyanate organique a au moins un groupe isocyanate.

7. Utilisation selon la revendication 5 ou 6, **caractérisée en outre en ce que** l'isocyanate organique est choisi dans le groupe d'un diisocyanate aliphatique et du diisocyanate de diphénylméthane.

8. Utilisation selon l'une quelconque des revendications 5 à 7 où le produit polymère est conforme à la formule générale X-A-X où A représente une chaîne polyoxyalkylène ou une chaîne polydiorganosiloxane et X représente un groupe hydroxyle ou hydrolysable choisi parmi -R"₂SiOH, -R"Si(OR⁵)₂, -Si(OR⁵)₃, -R"₂SiOR⁵ et -R"₂SiR""SiR"_{*p*}(OR⁵)₃₋_{*p*} où R" représente un groupe alkyle ou fluoroalkyle, R"' est un groupe hydrocarboné divalent qui peut être interrompu par un ou plusieurs espaceurs siloxanes ayant jusqu'à 6 atomes de silicium, R⁵ représente un groupe alkyle ou oxyalkyle où les groupes alkyle ont jusqu'à 6 atomes de carbone et *p* a la valeur 0, 1 ou 2.

9. Utilisation selon la revendication 8, **caractérisée en outre en ce que** A représente -(R"₂SiO)_{*t*}- où chaque R" représente un groupe méthyle et *t* a une valeur d'environ 200 à environ 1500.
